# EUROPÄISCHE PATENTSCHRIFT

(11) **EP 0 550 805 B1**
(45) Veröffentlichungstag und Bekanntmachung des Hinweises auf die Patenterteilung: **18.06.1997**
(21) Anmeldenummer: 92118247.3
(22) Anmeldetag: 24.10.1992
(51) Int. Cl.: H04M 1/72

(54) **Einrichtung zur Kennungspaarung für einen aus mehreren Geräteteilen bestehenden Funkapparat**
Identification pairing device for a radio equipment comprising several pieces of apparatus
Appariement d'identification pour un équipement radio constitué de différents appareils

(30) Priorität: 10.12.1991 DE 4140585
(43) Veröffentlichungstag der Anmeldung: 14.07.1993
(73) Patentinhaber: GRUNDIG Aktiengesellschaft, 90762 Fürth (DE)
(72) Erfinder: Breitenbach, Andreas, GRUNDIG E.M.V. Max Grundig, D-90748 Fürth (DE); Rossdeutsch, Karl-Heinz, c/o Grundig E.M.V. Max, D-90748 Fürth (DE)

(56) Entgegenhaltungen:
- EP-A- 178 393
- EP-A- 0 148 458
- EP-A- 0 359 327
- EP-A- 0 418 853
- US-A- 4 525 865
- US-A- 5 020 144

## Beschreibung

Die Erfindung betrifft eine Fertigungseinrichtung für einen aus mehreren Geräteteilen bestehenden Funkapparat gemäß dem Oberbegriff des Patentanspruchs 1.

Es ist bekannt, bei Funkapparaten, die sich aus mehreren Geräteteilen zusammensetzen, wie z.B. ein schnurloses Telefon, Kennungen zwischen den Geräteteilen auszutauschen, so daß nur die über die Kennung einander zugeordneten Geräteteile eine Verbindung miteinander aufbauen können. Die Speicherung der Kennung erfolgt hierfür in einem Kennungsspeicher, den jedes Geräteteil aufweist. Bei der Herstellung der Funkapparate ist es deshalb erforderlich, den Geräteteilen, die denselben Funkapparat bilden, eine identische Kennung in den Kennungsspeicher einzuprogrammieren.

Aus der DE-OS 34 36 696 und der entsprechenden EP-A2-0 178 393 ist ein Fertigungsverfahren für schnurlose Telefone bekannt, bei dem die Geräteteile unabhängig voneinander hergestellt werden, wobei in der Basisstation individuelle Daten abgespeichert sind. Im weiteren Fertigungsablauf werden die Geräteteile dann erstmalig zusammengefügt. Dabei überträgt die Basisstation die gespeicherten Daten automatisch über einen speziellen hierfür vorgesehenen Kontakt unter Benutzung von Fehlersicherungscodes in den Kennungsspeicher der Mobilstation. Dadurch sind Mobil- und Basisstation einander zugeordnet. Ein ordnungsgemäßes Einschreiben der Daten wird akustisch und/oder optisch durch ein Signalelement des schnurlosen Telefons signalisiert.

Dieses Fertigungsverfahren hat den Nachteil, daß zur akustischen und/oder optischen Signalisierung einer ordnungsgemäß abgespeicherten Kennung mindestens ein Signalelement am Gerät vorhanden sein muß. Weiterhin hat das beschriebene Fertigungsverfahren den Nachteil, daß eine Person zur Überprüfung der Signalelemente abgestellt werden muß oder daß die Signalelemente erst später, z.B. wenn die schnurlosen Telefone verpackt werden, überprüft werden können. Bei einer nicht korrekten Kennungsspeicherung in nur einem der Geräteteile entsteht ein Mehraufwand durch die Fertigungsabläufe, die zwischen der Einspeicherung der Kennung und dem Verpacken anfallen. Weiterhin entsteht durch die zueinander komplementären Kontaktanordnungen an Mobil- und Basisstation (welche zur galvanischen Übertragung der individuellen Daten dienen) ein zusätzlicher Fertigungsaufwand.

Aus der EP-A2 O 359 327 ist ein Emulator für den Kennungsspeicher schnurloser Telefone bekannt, der aus einem Rechner, einem Meßgerät, und einem Schreib-Lese-Speicher besteht, die miteinander in Verbindung stehen.

Bei der Überprüfung eines schnurlosen Telefons wird eine Kennung durch den Rechner ausgewählt. Dieser steuert die Übertragung sowohl in den Schreib-Lese-Speicher (der anstatt des Kennungsspeichers mit dem schnurlosen Telefon verbunden ist) als auch zum Meßgerät. Anschließend wird eine Funktion des schnurlosen Telefons durch den Rechner aufgerufen, die durch das Meßgerät analysiert wird. Die durchgeführte Funktion wird im Rechner mit der erwarteten Funktion verglichen und daraufhin die Entscheidung getroffen, ob das Telefon fehlerfrei arbeitet oder nicht. Die Kennung kann dabei sowohl über eine Tastatur als auch programmgesteuert dem Rechner vorgegeben werden.

Obwohl durch diesen Emulator die Bereitstellung von Speicherbausteinen (die verschiedene Kennungen enthalten) entfällt, ist der Aufwand relativ hoch. Nur um ein schnurloses Telefon mit verschiedenen Kennungen zu betreiben, werden ein Schreib-Lese-Speicher, ein Meßgerät und ein Rechner benötigt.

Der Erfindung liegt die Aufgabe zugrunde, bei der Fertigung eines aus mehreren Geräteteilen bestehenden Funkapparats möglichst viele Fertigungsschritte zu automatisieren, insbesondere in der Fertigungseinrichtung möglichst mehrere Fertigungsschritte zusammenzufassen.

Diese Aufgabe wird erfindungsgemäß durch die Merkmale der Patentansprüche 1 und 2 gelöst.

Die erfindungsgemäße Einrichtung weist den Vorteil auf, daß eine Vielzahl von Fertigungsschritten durch nur ein Fertigungsgerät durchgeführt werden. Dadurch wird sowohl Personal- als auch Kapitaleinsatz verringert.

Weiterhin kann auf optische und/oder akustische Signalisierungsmittel, die die korrekte Einspeicherung signalisieren, im Funkapparat verzichtet werden. Dies ist darauf zurückzuführen, daß die Einprogrammierung der Kennung und der Leistungsmerkmale mit demselben Fertigungsgerät erfolgt wie der anschließende Funktionstest des Funkapparats.

Dadurch wird auch ausgeschlossen, daß ein Funkapparat, bei dem die Kennung und/oder die Leistungsmerkmale nicht korrekt abgespeichert wurden, noch weitere Fertigungsschritte durchläuft.

Aus der DE-OS 39 09 766 ist ein schnurloses Telefon bekannt, bei dem Daten durch Beeinflussung des Ladestroms von der Grundeinheit in das Handgerät übertragen werden. Durch die Wahl des Ladestroms zur Datenübertragung zwischen Grundeinheit und Handgerät können spezielle Kontaktanordnungen zur Datenübertragung eingespart werden. Bei der erfindungsgemäßen Einrichtung wird der in der DE-OS 39 09 766 aufgezeigte Weg zur Datenübertragung benutzt.

Aus der EP-A2-O 229 486 ist eine Einrichtung zum automatischen Abgleich von Schaltungen bekannt. Dieser Einrichtung werden bestückte Leiterplatten zugeführt, die einstellbare Bauelemente aufweisen. Um einen Abgleich durchzuführen, wird die Schaltung in einem beweglichen Rahmen fixiert und den Bauelementen ein Testsignal zugeführt, so daß eine Mikroprozessorsteuerung aufgrund der abgegriffenen Ausgangssignale der Bauelemente deren Einstellung verändert. Hierfür wird ein passendes Werkzeug ausgewählt, an die richtige Stelle in der Schaltung gebracht und der Wert des betreffenden Bauelementes verändert. Bei der erfindungsgemäßen Einrichtung kann eine aus der EP-A2-0 229 486 bekannte Einrichtung zum automatischen Abgleich von Schaltungen integriert sein.

Die Einrichtung nach Patentanspruch 2 weist den Vorteil auf, daß Daten, wie z.B. die individuelle Kennung des Geräteteils, über die Leitungen übertragen werden, die als Verbindung zu einem Nachrichtennetz dienen. Dadurch ist eine Änderung der eingespeicherten Daten auch nach der Produktion möglich und es kann das Nachrichtennetz zur Übermittlung der neuen Daten verwendet werden. Weiterhin weist die Einrichtung den Vorteil auf, daß bei Funkapparaten mit verschiedenen Leistungsmerkmalen nicht die Fertigung geändert werden muß, sondern nur ein anderes Datenwort zur Festlegung der Leistungsmerkmale im Funkapparat abgespeichert wird.

Die Fertigungseinrichtung nach Patentanspruch 3 weist den Vorteil auf, daß die Kennung von derselben Rechnersteuerung erzeugt wird, die die Funktionstests durchführt, so daß die Kennung, die für diese Tests verwendet werden muß, der Rechnersteuerung bereits bekannt ist und ein Emulator für den Kennungsspeicher, wie aus EP-A2-O 359 327 bekannt, nicht erforderlich ist.

Die Fertigungseinrichtung nach Patentanspruch 4 weist den Vorteil auf, daß die individuelle Kennung ebenso wie die anderen abgespeicherten Daten bei einem Test der Geräteteile überprüft werden, so daß bei fehlerhaft abgespeicherten Daten die entsprechenden Geräteteile aussortiert werden können.

Schließlich ergibt sich aus Patentanspruch 5 der Vorteil, daß für die Steuerung des Fertigungsgerätes ein beliebiger Personal-Computer verwendet werden kann.

Die Erfindung wird im folgenden anhand in der Zeichnung dargestellter Ausführungsformen näher beschrieben und erläutert. Es zeigt:
- Fig. 1: ein Blockschaltbild des Fertigungsgerätes
- Fig. 2: einen Ablaufplan der Fertigungsschritte, die das Fertigungsgerät durchführt.

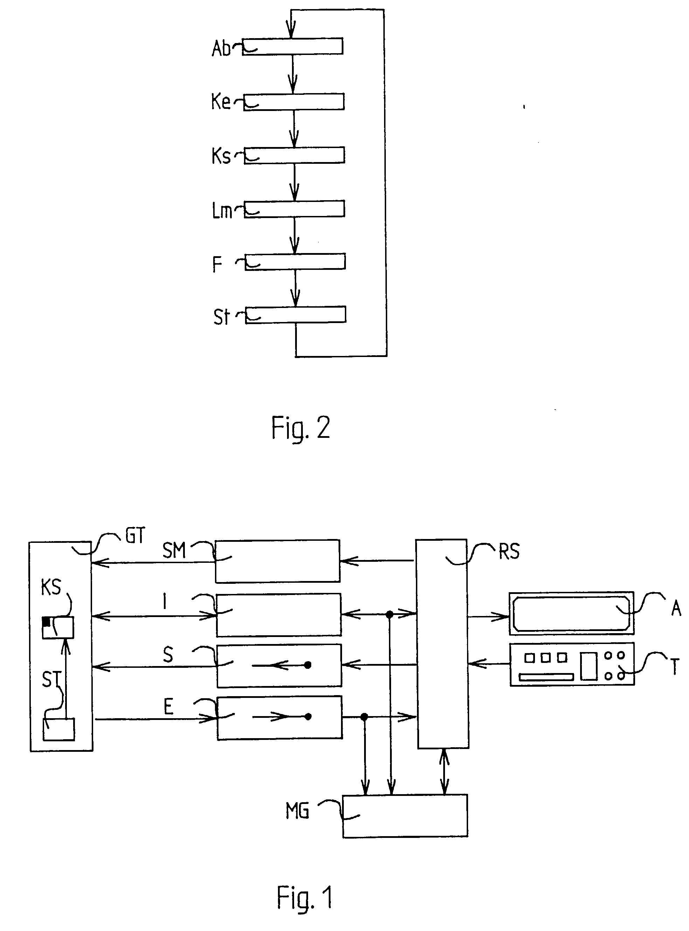

Fig. 1 zeigt den Aufbau des Fertigungsgerätes, das eine Tastatur T zur Eingabe, eine Anzeige A zur Überwachung des Fertigungsprozesses, eine Schaltung zur Schleifenstrommodulation SM, ein Interface I zur Signalübertragung zwischen Geräteteil GT und Fertigungsgerät, einen Sender S, um Signale an das zu fertigende Geräteteil GT zu senden, einen Empfänger E, um Signale vom zu fertigenden Geräteteil GT zu empfangen, ein Meßgerät MG, sowie die Rechnersteuerung RS, die das Fertigungsgerät entsprechend einem Programm steuert, aufweist.

Über die Tastatur T wird das Programm zur Steuerung des Fertigungsgerätes gestartet und notwendige Parameter, wie der Startwert, der benutzt werden soll, um die abzuspeichernde Kennung zu erzeugen, das Datenwort das die Leistungsmerkmale der produzierten Funkapparate festgelegt und die Anzahl der zu produzierenden Funkapparate, eingegeben. Die Anzeige A dient zur Darstellung der für den Fertigungsprozeß signifikaten Größen, wie der Leistungsmerkmale und der Produktionsstatistik, die die Anzahl produzierter Geräte, deren Fehlerrate insgesamt und in Abhängigkeit von der Baugruppe angibt. Sowohl die Tastatur T als auch die Anzeige A sind mit dem Rechner RS verbunden, der das Fertigungsgerät steuert. Als Rechner RS wird ein Personal-Computer verwendet, der über seine Schnittstellen mit den zu steuernden Gerätekomponenten in Verbindung tritt.

Mittels Sender S und Empfänger E des Fertigungsgerätes können über einen Funkkanal zwischen Fertigungsgerät und Geräteteil GT Informationen drahtlos ausgetauscht werden. Dagegen können mit dem speziellen Interface I, sowohl der Steuerung ST des Geräteteils GT Daten drahtgebunden übermittelt als auch Meßwerte vom Geräteteil GT an das Meßgerät MG übertragen werden. Die Schaltung zur Schleifenstrommodulation SM ermöglicht den Informationsaustausch über die Hauptanschlußleitungen des Geräteteils GT.

Das zu fertigende Geräteteil GT wird zunächst über das Interface I und, wenn das Geräteteil GT Hauptanschlußleitungen aufweist, mit der Schleifenstrommodulation SM elektrisch leitend verbunden, so daß Signale zwischen Fertigungsgerät und Geräteteil GT ausgetauscht werden können. Zusätzlich besteht über den Sender S und Empfänger E im Fertigungsgerät und Geräteteil GT eine Funkverbindung. Nachdem das Geräteteil GT mit dem Fertigungsgerät derart verbunden wurde, beginnt der Fertigungsprozeß, dessen Ablauf in Fig. 2 dargestellt ist.

Fig. 2 zeigt einen Ausschnitt aus dem Ablauf des Fertigungsprozesses. Zunächst wird ein Abgleich Ab durchgeführt, der sich wiederum aus zwei Schritten zusammensetzt.

Im ersten Schritt werden einstellbare Bauelemente der Schaltungen der Geräteteile so eingestellt, daß ein vorschriftsmäßiger Betrieb des Funkapparates gewährleistet wird. Dies kann sowohl manuell als auch durch eine vom Rechner RS gesteuerte Maschine erfolgen, wie sie aus der EP-A2-O 229 486 bekannt ist. Hierfür ist es erforderlich, durch den Rechner RS das Geräteteil GT einzuschalten und verschiedene Funktionen durchführen zu lassen. Die benötigten Steuerbefehle für das Geräteteil GT werden vom Rechner RS über die Schleifenstrommodulation SM bzw. das Interface I und/oder den Sender S zum Geräteteil GT übertragen. Die damit im Geräteteil GT ausgelösten Funktionen verändern charakteristische Größen, die vom Meßgerät MG gemessen und dem Rechner RS zugeleitet werden. Der Rechner RS vergleicht die jeweilige gemessene, charakteristische Größe des Geräteteils GT mit einem abgespeicherten Referenzwert und stellt das entsprechende veränderbare Bauelement so ein, daß der gemessene Wert, unter Berücksichtigung einer individuellen Toleranz, dem Referenzwert entspricht. Werden die Bauelemente manuell eingestellt, so zeigt der Rechner RS auf der Anzeige A die Position des zu verändernden Bauteils sowie die Differenz zwischen dem gemessenen Wert und dem Referenzwert der jeweiligen charakteristischen Größe an, so daß jedes einstellbare Bauteil einheitlich auf den Wert Null in der Anzeige A des Rechners RS abgeglichen werden muß.

Im zweiten Schritt des Abgleichprozesses werden in einem Festwertspeicher des Funkapparates Referenzwerte für charakteristische Größen abgespeichert, so daß der Funkapparat die gespeicherte mit der tatsächlichen Größe vergleichen und ggfs. die betreffende Größe nachregeln kann. Dadurch wird der Funkapparat unabhängig von äußeren Einflüssen wie Temperatur- oder Luftfeuchtigkeitsschwankungen. Auch die Abweichung charakteristischer Größen aufgrund von Alterung der Bauteile ist so zu einem hohen Grad kompensierbar.

Um den Abgleichvorgang zu vereinfachen, kann auch nur einer der beiden beschriebenen Schritte des Abgleichprozesses durchgeführt werden.

Sind alle einzustellenden Bauteile des Geräteteils GT abgeglichen, wird im nächsten Schritt Ke vom Rechner RS eine Kennung erzeugt. Hierfür wird ein Startwert benötigt. Dieser kann entweder durch den Benutzer über die Tastatur T eingegeben oder vom Rechner RS aus einem Speicher ausgelesen werden. Der Rechner RS hat den davor verwendeten Wert abgespeichert.

Der Startwert wird für jeden Funkapparat um eins erhöht und kann auch noch durch eine eindeutige Funktion verändert werden. Die derart erhaltene Kennung wird im Schritt Ks an alle Geräteteile GT übertragen, die einen Funkapparat bilden. Die Übertragung erfolgt über den Schleifenstrom, wenn das Geräteteil GT entsprechende Anschlüsse für den Schleifenstrom aufweist, oder über den Ladestrom, wenn diese Anschlüsse vorhanden sind.

Zur Datenübertragung besteht die Möglichkeit, entweder den Strom oder die Spannung zu modulieren. Um Übertragungsfehler zu vermeiden, werden die derart übertragenen Datenwörter wieder zurückübertragen. Ein Datenwort setzt sich in der Regel aus einem Startbit, mehreren Datenbits, einem Togglebit und einem Stopbit zusammen. Das Togglebit hat bei Übertragung und Rückübertragung verschiedene Zustände. Dadurch existiert ein Merkmal, an dem die zuerst übertragenen Daten von den wieder zurückgesendeten Daten unterschieden werden können. Der Rechner RS vergleicht übertragenes Datenwort und zurückgesendetes Datenwort. Stimmen beide Datenwörter bis auf das Toggle-Bit überein, wird das nächste Datenwort übertragen, ansonsten wird die Übertragung des Datenwortes wiederholt. Ist eine korrekte Übertragung nicht möglich, ist das Geräteteil GT fehlerhaft und wird aussortiert.

Entsprechend der Speicherung der Kennung wird im darauffolgenden Fertigungsschritt Lm auch das Datenwort, das die Leistungsmerkmale festlegt, in einen Festwertspeicher der Geräteteile GT übertragen; außerdem besteht die Möglichkeit, weitere Daten auf diese Weise in die Geräteteile GT des Funkapparates zu übertragen und abzuspeichern. Die Festlegung der Leistungsmerkmale durch ein Datenwort ermöglicht es, daß Funkapparate mit verschiedenen Leistungsmerkmalen zunächst einen einheitlichen Fertigungsablauf durchlaufen. Am Ende der Fertigung werden dann die Leistungsmerkmale einzeln oder in Gruppen durch ein Datentwort aktiviert, oder auch nicht. Dadurch können besonders bei kleinen Stückzahlen die Fertigungskosten merklich gesenkt werden.

Anschließend folgt im nächsten Fertigungsschritt F ein Test des Geräteteils GT. Dabei werden verschiedene Funktionen des Funkapparates angesteuert. Das Fertigungsgerät dient als Gegenstation, welche mit dem gerade gefertigten in Verbindung tritt. Dies ist möglich, da das Fertigungsgerät sowohl den entsprechenden Sender S und Empfänger E aufweist, als auch die Kennung des gefertigten Geräteteils GT noch gespeichert ist. Das Meßgerät MG mißt während des Tests die über Interface I oder Empfänger E zugeführten charakteristischen Größen des Geräteteils GT, wie beispielsweise Feldstärke, Frequenz und Spannung, und übermittelt sie an den Rechner RS, wo sie mit Referenzwerten verglichen werden. Stimmen die gemessenen Werte, unter Berücksichtigung von Toleranzen, mit den Referenzwerten überein, ist das gefertigte Geräteteil nicht fehlerhaft, ansonsten wird es vom Rechner RS als fehlerhaft erkannt und aussortiert. Mittelbar wird durch diesen Test auch geprüft, ob die im Geräteteil GT abgespeicherten Daten, wie z.B. die individuelle Kennung, korrekt gespeichert sind.

Abschließend ergänzt der Rechner RS die Statistik St, in der die Anzahl insgesamt gefertigter Geräteteile GT und die Anzahl fehlerhafter Geräteteile GT, nach fehlerhaften Baugruppen geordnet, erfaßt wird. Die Statistik St kann jederzeit über die Tastatur T abgerufen werden, woraufhin die ermittelten Werte in der Anzeige A angezeigt werden. Dies ermöglicht es, Fehlerquellen schnell zu lokalisieren und zu beheben.

## Patentansprüche

1. Fertigungseinrichtung für einen aus mehreren Geräteteilen bestehenden Funkapparat, wobei jedes Geräteteil (GT) einen elektronischen Speicher (KS) aufweist, in dem eine Kennung gespeichert wird, durch die die Geräteteile (GT) eines Funkapparats einander zugeordnet werden,
**dadurch gekennzeichnet**,
daß die Fertigungseinrichtung eine Rechnersteuerung (RS) aufweist, welche nach einem Abgleich eine individuelle Kennung erzeugt und das Einschreiben in den Speicher (KS) jedes Geräteteils (GT) steuert und daß die Fertigungseinrichtung Mittel zur Übertragung der zu speichernden Kennung durch Modulation des Ladestroms oder der Ladespannung für einen wiederaufladbaren Energiespeicher eines Geräteteils (GT) aufweist.

2. Fertigungseinrichtung für einen aus mehreren Geräteteilen bestehenden Funkapparat, wobei jedes Geräteteil (GT) einen elektronischen Speicher (KS) aufweist, in dem eine Kennung gespeichert wird, durch die die Geräteteile (GT) eines Funkapparats einander zugeordnet werden,
**dadurch gekennzeichnet**,
daß die Fertigungseinrichtung eine Rechnersteuerung (RS) aufweist, welche nach einem Abgleich eine individuelle Kennung erzeugt und das Einschreiben in den Speicher (KS) jedes Geräteteils (GT) steuert und
daß die Fertigungseinrichtung eine Schaltung zur Schleifenstrommodulation (SM) aufweist, welche zur Übertragung der individuellen Kennung und weiterer Daten zu einem Geräteteil (GT), das eine galvanische Verbindung zu einem Nachrichtennetz aufweist, den Strom oder die Spannung auf dieser Verbindung moduliert oder die Fertigungseinrichtung einen Sender (S) und einen Empfänger (E) für eine drahtlose Übertragung der individuellen Kennung und weiterer Daten über Funkübertragungskanäle zu einem und von einem Geräteteil (GT) aufweist.

3. Fertigungseinrichtung nach Anspruch 1 oder 2,
**dadurch gekennzeichnet**,
daß die Rechnersteuerung (RS) Mittel zum Erzeugen einer Kennung, ausgehend von einem Startwert durch Inkrementieren dieses Startwerts, aufweist.

4. Fertigungseinrichtung nach einem der Ansprüche 1 bis 3,
**dadurch gekennzeichnet**,
daß Mittel vorgesehen sind, um die in den Speichern (KS) der Geräteteile (GT) abgespeicherte individuelle Kennung bei einem Test der Geräteteile (GT) zu überprüfen.

5. Fertigungseinrichtung nach einem der Ansprüche 1 bis 4,
**dadurch gekennzeichnet**,
daß die Rechnersteuerung (RS) der Fertigungseinrichtung durch einen Personal-Computer realisiert wird.

## Claims

1. Manufacturing device for a radio set comprising a plurality of appliance parts, each appliance part (GT) having an electronic memory (KS) in which there is stored an identifier by means of which the appliance parts (GT) of a radio set are assigned to one another, characterized in that the manufacturing device has a computer control (RS) which generates an individual identifier after an alignment and which controls the input into the memory (KS) of each appliance part (GT) and in that the manufacturing device has means for transmitting the identifier to be stored by modulating the charging current or the charging voltage for a rechargeable energy store of an appliance part (GT).

2. Manufacturing device for a radio set comprising a plurality of appliance parts, each appliance part (GT) having an electronic memory (KS) in which there is stored an identifier by means of which the appliance parts (GT) of a radio set are assigned to one another, characterized in that the manufacturing device has a computer control (RS) which generates an individual identifier after an alignment and controls the input into the memory (KS) of each appliance part (GT), in that the manufacturing device has a loop-current modulation circuit (SM) which, for the purpose of transmitting the individual identifier and further data to an appliance part (GT) having a conductive connection to a communications network, modulates the current or the voltage on said connection, or the manufacturing device has a transmitter (S) and a receiver (E) for a wireless transmission of the individual identifier and further data via radio transmission channels to and from an appliance part (GT).

3. Manufacturing device according to Claim 1 or 2, characterized in that the computer control (RS) has means for generating an identifier, proceeding from an starting value by incrementing said initial value.

4. Manufacturing device according to one of Claims 1 to 3, characterized in that means are provided for checking, during a testing of the appliance parts (GT), the individual identifier stored in the memories (KS) of the appliance parts (GT).

5. Manufacturing device according to one of Claims 1 to 4, characterized in that the computer control (RS) of the manufacturing device is formed by a personal computer.

## Revendications

1. Dispositif de fabrication pour un appareil radio constitué de plusieurs parties, chaque partie (GT) de l'appareil comportant une mémoire électronique (KS), dans laquelle est mémorisé un indicatif, au moyen de laquelle les parties (GT) d'un appareil radio peuvent être associées entre elles, caractérisé en ce que le dispositif de fabrication comporte une unité de commande à calculateur (RS), qui après un équilibrage, produit un indicatif individuel et commande l'écriture dans la mémoire (KS) de chaque partie (GT) de l'appareil et que le dispositif de fabrication comporte des moyens pour transmettre l'indicatif à mémoriser, par modulation du courant de charge ou de la tension de charge pour un accumulateur d'énergie rechargeable d'une partie (GT) de l'appareil.

2. Dispositif de fabrication pour un appareil radio constitué de plusieurs parties, chaque partie (GT) de l'appareil comportant une mémoire électronique (KS), dans laquelle est mémorisée une identification, au moyen de laquelle les parties (GT) d'un appareil radio peuvent être associées entre elles, caractérisé en ce que le dispositif de fabrication comporte une unité de commande à calculateur (RS) qui, après un équilibrage, produit un indicatif individuel et commande l'écriture dans la mémoire (KS) de chaque partie (GT) de l'appareil, que le dispositif de fabrication comporte un circuit de modulation du courant de boucle (SM), qui pour la transmission de l'indicatif individuel et d'autres données à une partie (GT) de l'appareil, qui possède une liaison galvanique avec un réseau de transmission de messages, module le courant ou la tension dans cette liaison, ou que le dispositif de fabrication comporte un émetteur (S) et un récepteur (E) pour une transmission sans fil de l'indicatif individuel et d'autres données concernant des canaux de transmission hertziens en direction ou en provenance d'une partie (GT) de l'appareil.

3. Dispositif de fabrication selon la revendication 1 ou 2, caractérisé en ce que l'unité de commande à calculateur (RS) comporte des moyens pour produire un indicatif, à partir d'une valeur initiale, par incrémentation de cette valeur initiale.

4. Dispositif de fabrication selon l'une des revendications 1 à 3, caractérisé en ce que des moyens sont prévus pour contrôler l'indicatif individuel, mémorisé dans les mémoires (KS) des parties (GT) de l'appareil, lors d'un test des parties (GT) de l'appareil.

5. Dispositif de fabrication selon l'une des revendications 1 à 4, caractérisé en ce que l'unité de commande à calculateur (RS) du dispositif de fabrication est constituée par un ordinateur personnel.
